# EUROPÄISCHE PATENTSCHRIFT

(11) **EP 2 189 083 B1**
(45) Veröffentlichungstag und Bekanntmachung des Hinweises auf die Patenterteilung: **13.04.2011**
(21) Anmeldenummer: 09169439.8
(22) Anmeldetag: 04.09.2009
(51) Int. Cl.: A47C 27/14, A47C 27/00

(54) **Polyurethan-Schaum-Matratze, enthaltend mindestens ein antimikrobielles Additiv**
Polyurethane foam mattress containing at least one antimicrobial additive
Matelas de mousse de polyuréthane comprenant au moins un additif antimicrobien

(30) Priorität: 25.11.2008 DE 202008015613 U
(43) Veröffentlichungstag der Anmeldung: 26.05.2010
(73) Patentinhaber: Breckle, Gerd, 07570 Weida (DE)
(72) Erfinder: Breckle, Gerd, 07570 Weida (DE)
(74) Vertreter: Kruspig, Volkmar

(56) Entgegenhaltungen:
- EP-A2- 1 316 635
- EP-A2- 1 817 986
- AT-U3- 8 326
- DE-A1- 10 337 209
- DE-U1- 9 310 575
- US-A- 4 937 273

## Beschreibung

Die Erfindung betrifft eine Polyurethan-Schaum-Matratze, enthaltend mindestens ein antimikrobielles Additiv, insbesondere in Form eines Metall-, wiederum insbesondere Silberionen freisetzenden Mittels gemäß Oberbegriff des Anspruchs 1.

Aus dem Gebrauchsmuster AT 008 326 U2 ist eine Matratze aus einem Polyurethan-Weichschaum mit einer bioziden Ausrüstung auf Basis eines silberhaltigen Zeoliths vorbekannt. Um eine ausreichende biozide Wirkung zu erreichen, ist dort vorgeschlagen, dass der Polyurethan-Weichschaum neben 0,1 bis 5 Gew.-% eines silberhaltigen Zeoliths 0,1 bis 2 Gew.-% wenigstens eines tertiären Amins enthält. Um das silberhaltige Zeolith zusammen mit dem Amin in die Matrix des Polyurethan-Weichschaums einzubauen, wird eine Polyolkomponente mit einer Isocyanatkomponente unter Einwirkung eines Treibmittels in einer Polyaddition zu einem Polyurethan-Weichschaum umgesetzt. Weiterhin ist der Polyolkomponente ein Gemisch aus 0,1 bis 5 Gew.-% des silberhaltigen Zeoliths und 0,1 bis 2 Gew.-% des Amins vor der Reaktion mit der Isocyanatkomponente hinzuzufügen, um die angestrebte biozide Ausrüstung als Kern der Matratze zu erhalten. Die Amine wirken katalysierend auf die Polyaddition zwischen der Polyolkomponente und der Isocyanatkomponente in der Polyurethansynthese. Es hat sich jedoch gezeigt, dass bei notwendigen Reinigungsprozessen der Matratze die biozide Wirkung sehr schnell nachlässt, was einen wesentlichen Nachteil darstellt.

Aus der DE 602 12 874 T2 ist ein antimikrobielles Verbundmaterial vorbekannt. Dieses Verbundmaterial umfasst einen Mikroteilchenträger, wobei Metallionen und Nichtmetallkationen an der Oberfläche des Trägers gebunden sind. Der Mikroteilchenträger besteht im Wesentlichen aus polymeren anorganischen Teilchen, d.h. es liegt ein anorganischer Mikroteilchenträger vor. Das Verbundmaterial kann zum Herstellen von Teppichen, Tüchern, Wischern, Textilstoffen, aber auch von Kautschuk oder dergleichen eingesetzt werden. Ebenso besteht die Möglichkeit, das Verbundmaterial in einen Polyurethan-Weichschaum einzubringen. Hierbei wird auf ein Verfahren zur Herstellung des Polyurethan-Weichschaums zurückgegriffen, das das Herstellen eines Gemischs aus dem Verbundstoff und einem Polyurethan-Prepolymer oder -Bindemittel und das Polymerisieren des Gemischs umfasst. Die Metallionen sind bevorzugt Ionen der Silberreihe einschließlich u.a. Silberionen, Kupferionen und/oder Zinkionen.

Bei der gegen Mikroorganismen imprägnierten Matratze nach DE 296 04 832 U1 wird von einer Matratze ausgegangen, die einen außenseitigen Bezug, einen federnd elastischen Kern und eine zwischen Kern und Bezug angeordnete Zwischenschicht umfasst. Nach der dortigen Lehre wird die zwischen Kern und Bezug gefüllte Zwischenschicht als Vlies ausgebildet, wobei das Vlies Metallionen enthält und der Kern aus einem Schaumstoff besteht. Bevorzugt werden als Metallionen Silberionen verwendet, die für Mikroorganismen in hohem Grade toxisch sind, während ihre Wirkung für Menschen und Haustiere unbedenklich ist. Bevorzugt kommen Kunstfasern zum Einsatz, die in ihrem Inneren den antibaktierellen Wirkstoff enthalten und die beispielsweise durch Koextrusion hergestellt werden. Durch das Verfahren der Koextrusion ist sichergestellt, dass der antimikrobielle Wirkstoff weitgehend vom Fasermaterial umschlossen und damit gebunden ist. Hierdurch wird in gewissem Maß verhindert, dass die Abgabe des Wirkstoffs an den Benutzer der Matratze sowie ein Herauslösen nach einem Wasch- oder Reinigungsvorgang ausgeschlossen ist.

Hinsichtlich eines Polyurethan-Schaums, der in hohem Maß geruchsabsorbierend und feuchtigkeitsspeichernd sowie antibakteriell ausgebildet ist, sei auf die US 2005/0245627 A1 verwiesen.

Silberbasierende antimikrobielle Stoffe sind darüber hinaus aus dem US-Patent 6,187,456 B1 und den dortigen Bezugnahmen vorbekannt.

Im US 4,937,273 A wird ein Polyurethan-Schaum offenbart, der u. A. Metallionen wie z.B. Silber, wegen seiner antibakteriellen Wirkung, aufweist. Im Dokument wird der Schaum auch als Matratze eingesetzt.

Aus dem Vorgenannten ist es daher Aufgabe der Erfindung, eine weiterentwickelte Polyurethan-Schaum-Matratze, enthaltend mindestens ein antimikrobielles Additiv, anzugeben, welche sowohl einen optimalen Schlafkomfort ermöglicht als auch gleichzeitig hochgradig antimikrobielle Wirkungen entfaltet. Die anzugebende Matratze soll frei von allergenen Substanzen sein und mögliches Pilzwachstum hemmen. Darüber hinaus soll die anzustrebende antimikrobielle Funktion auch nach mehrfachem Reinigen der Matratze erhalten bleiben.

Die Lösung der Aufgabe der Erfindung erfolgt durch eine Polyurethan-Schaum-Matratze gemäß der Merkmalskombination nach Anspruch 1, wobei die Unteransprüche mindestens zweckmäßige Ausgestaltungen und Weiterbildungen umfässen.

Es wird demnach von einer Polyurethan-Schaum-Matratze, enthaltend mindestens ein antimikrobielles Additiv, insbesondere in Form eines Metall-, wiederum insbesondere Silberionen freisetzenden Mittels ausgegangen. Erfindungsgemäß ist der Polyurethan-Schaum als geschlossenzelliger oder besonders bevorzugt offenzelliger, viskoelastischer Schaum ausgebildet, wobei das antimikrobielle Additiv, als pulverförmiger Feststoff mit annähernd gleichmäßiger Korngrößenverteilung vorliegend, in den Schaum reaktionsfrei bezüglich der Schaumkomponenten eingearbeitet ist.

Das reaktionsfreie Einbinden des als pulverförmiger Feststoff vorliegenden Additivs sichert die gewünschte hohe bakterienzerstörende und pilzhemmende Wirkung und stellt darüber hinaus sicher, dass auch nach mehrfachen Reinigungsprozessen die erstrebten fungiziden und bioziden Wirkungen erhalten bleiben.

Der pulverförmige Feststoff lässt sich darüber hinaus sehr einfach in eine Polyol-Ausgangskomponente einrühren. Dabei ist eine bis zu 20%ige Dispersion des Additivs im Polyol stabil. Hierdurch ergeben sich wesentliche Vorteile bei der Verarbeitung, d.h. der Herstellung des eigentlichen Schaums für die Matratze.

Erfindungsgemäß ist ein Matratzenbezug vorgesehen, welcher Silberbestandteile, insbesondere silberhaltige Fäden oder Fasern aufweist.

Nach der Erfindung ist der Bezug als Steppvlies ausgebildet, wobei der Steppfaden Silber aufweist oder Silber enthält. Der Bezug kann auch mehrlagig ausgeführt werden, d.h. das erwähnte Steppvlies mit Steppfaden aus Silber und das Baumwoll-Polyesterfaser-Mischgewebe aufweisen.

Dadurch, dass das Additiv in der Schaummatrix eingebettet ist, und zwar insbesondere hier in den Zellstegen, ist ein unerwünschtes Auswaschen ausgeschlossen, zumindest stark behindert. Die Additiv-Teilchen wirken nach dem Ionenaustauschmechanismus. Kommen Silberionen zum Einsatz, wird Silber nur dann freigesetzt, wenn ein entsprechendes Gegenion vorhanden ist und auch Feuchtigkeit vorliegt. Dies ist im Übrigen dann der Fall, wenn im Allgemeinen das Risiko eines Bakterienbefalls oder eines Bakterienwachstums vorliegt. Es wirkt also das Additiv tatsächlich nur dann, wenn es benötigt wird.

Die mittlere Teilchengröße des Additivs liegt bei im Wesentlichen 1,0 bis 1,5, insbesondere 1,3 µm.

Die gebildeten Schaumzellen weisen einen mittleren Durchmesser von 600 bis 1200 µm, bevorzugt 800 bis 1000 µm auf.

Zur insbesondere offenen Schaumzellenbildung wird sowohl bei mindestens ausgewählten Einzelkomponenten als auch bei der Bildung der Gesamtmischung der Komponenten in hoher Menge Luft zugeführt.

Der erhaltene viskoelastische Schaum ist thermosensibel und weist eine Glasübergangstemperatur von im Wesentlichen bei Raumtemperatur, hier insbesondere bei im Wesentlichen 25°C liegend, auf.

Bei einer erfindungsgemäßen Ausführungsform ist die Polyurethan-Schaum-Matratze als Mehrzonen-Matratze ausgebildet. Hier insbesondere weist die Matratze bis zu sieben Zonen unterschiedlicher Härte auf, die sich über die Matratzenlängsrichtung erstrecken und in der entsprechenden Breite ausgeführt sind.

Die Matratzenhärte lässt sich neben der Vorgabe aufgrund der Zellstruktur des Schaumstoffs durch über die Matratzenstärke eingebrachte Einschnitte realisieren.

Durch die Kombination einer Matratze mit einem antibakteriellen Schaumstoffkern und eines, auch abnehmbaren, Bezugs, insbesondere Doppeltuchbezugs mit silberionisierter Beschichtung, stellt sich eine mehr als nur additive antibaktierielle Wirkung ein.

Die Mehrzonen der Matratze können durch Längs- und Querschnitte auch dreidimensional ausgeführt werden, um gezielt die Punktelastizität zu erhöhen und ein unerwünschtes Nachschwingen zu vermeiden.

Die Erfindung soll anhand eines Ausführungsbeispiels sowie unter Zuhilfenahme von Figuren näher erläutert werden.

Hierbei zeigen:
- Fig. 1: eine dreidimensionale Teildarstellung einer Matratze mit teilweise weggebrochenem Bezug und erkennbaren Längs- und Querschnitten zum Erhöhen der Punktelastizität sowie zum Vermindern des Nachschwingens;
- Fig. 2: eine Rasterelektronenmikroskop-Aufnahme eines geschlossenzelligen viskoelastischen Schaums, wie er erfindungsgemäß für die Matratze zur Anwendung kommt, und
- Fig. 3: eine Rasterelektronenmikroskop-Aufnahme eines offenzelligen viskoelastischen Schaums, wie er ebenfalls erfindungsgemäß in Verbindung mit antimikrobiellen Additiven zum Einsatz kommt.

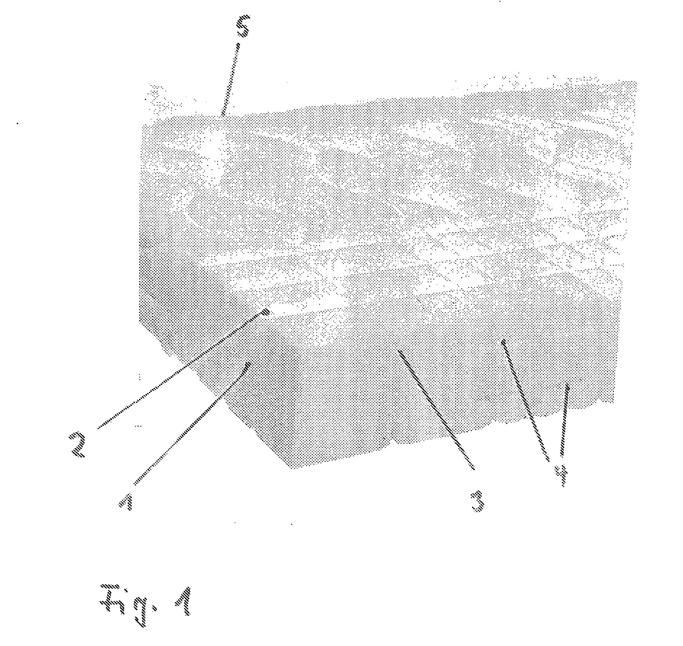

Die Abbildung gemäß Fig. 1 zeigt eine Matratze aus Polyurethan-Kaltschaum mit einer beispielhaften Höhe von ca. 18 cm.

Die Matratze weist einen PUR-Schaum-Matratzenkern 1 auf. Der Matratzenkern weist Einschnitte 2 in Längsrichtung sowie Einschnitte 3 in Querrichtung der Matratze auf. Auch dreidimensionale Ausnehmungen 4 in der Matratze dienen der gezielten Bildung verschiedener Härtezonen über die Matratzenlänge und/oder Matratzenbreite.

Weiterhin besitzt die Matratze gemäß Fig. 1 einen abnehmbaren Doppeltuchbezug 5, der eine silberionisierte Beschichtung umfasst, und zwar mit dem Ergebnis einer gewünschten antibakteriellen Wirkung. Der Doppeltuchbezug besteht aus der Kombination eines kreuzgelegten Vlies, das mit einer Steppfaser versehen ist, welche Silber aufweist.

Die Form der Absteppung kann so gewählt werden, dass bei ordnungsgemäßem Anbringen des Bezugs 5 auf der Matratze 1 die Lage der Komfortzonen, gebildet durch die Einschnitte, für den Benutzer erkennbar bleibt.

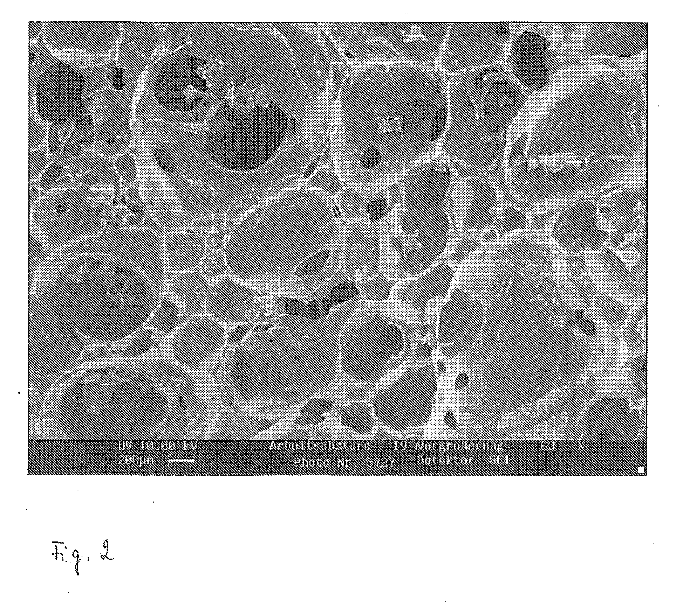

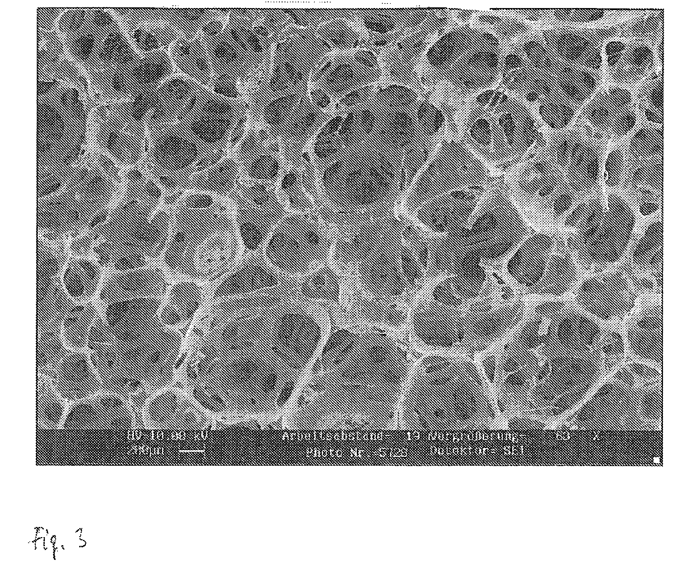

Wie aus den Fig. 2 und 3 ersichtlich, erfolgt die Schaumbildung derart, dass Schaumzellen mit einem vorgegebenen mittleren Durchmesser von etwa 600 bis 1200 µm entstehen.

Dadurch, dass das antimikrobielle Additiv, Silberionen freisetzend, als pulverförmiger Feststoff mit sehr gleichmäßiger Teilchengrößenverteilung und mit einer mittleren Teilchengröße von 1,3 µm vorliegt, lässt sich dieses Material sehr leicht in die Ausgangskomponenten zur Schaumbildung, insbesondere Polyol, einrühren, wobei eine bis zu 20%ige Dispersion des Additivs in Polyol stabil ist.

Das Additiv reagiert nicht mit Polyol oder Isocyanat, sondern kann wie ein Farbpigment in das Polyurethan eingebaut werden und befindet sich in der Schaummatrix. Bevorzugt befindet sich das Additiv in oder an den Zellstegen. Wenn Feuchte insbesondere in den offenzelligen Schaum eindringt, ist die Möglichkeit geschaffen, Silberionen freizusetzen, da entsprechende Gegenionen vorliegen. Nur dann, wenn Feuchtigkeit in der Matratze vorhanden ist und diese nicht schnell genug das Matratzenvolumen verlässt, ist ein Risiko hinsichtlich eines Bakterienwachstums gegeben. Es wirkt also das Additiv tatsächlich nur dann, wenn es auch benötigt wird.

## Patentansprüche

1. Polyurethan-Schaum-Matratze, enthaltend mindestens ein antimikrobielles Additiv, insbesondere in Form eines Metall-, wiederum insbesondere Silberionen freisetzenden Mittels, wobei der Polyurethan-Schaum als geschlossenzelliger oder offenzelliger viskoelastischer Schaum ausgebildet ist und das antimikrobielle Additiv, als pulverförmiger Feststoff mit annähernd gleichmäßiger Korngrößenverteilung vorliegend, in den Schaum reaktionsfrei bezüglich der Schaumkomponenten eingearbeitet ist,
**dadurch gekennzeichnet, dass**
ein Matratzenbezug vorgesehen ist, welcher Silberbestandteile, insbesondere silberhaltige Fäden oder Fasern aufweist, wobei der Bezug als Steppvlies ausgebildet ist und der Steppfaden aus Silber besteht oder Silber enthält.

2. Matratze nach Anspruch 1,
**dadurch gekennzeichnet, dass**
die Additivteilchen überwiegend in den Schaumzellstegen eingebettet oder angelagert sind.

3. Matratze nach Anspruch 1 oder 2,
**dadurch gekennzeichnet, dass**
das Additiv als Dispersion in der Polyol-Ausgangskomponente des Schaums eingebracht ist.

4. Matratze nach einem der vorangegangenen Ansprüche,
**dadurch gekennzeichnet, dass**
die mittlere Teilchengröße des Additivs bei im Wesentlichen 1,0 µm bis 1,5 µm, insbesondere 1,3 µm liegt.

5. Matratze nach einem der vorangegangenen Ansprüche,
**dadurch gekennzeichnet, dass**
die Schaumzellen einen mittleren Durchmesser von 600 µm bis 1200 µm, bevorzugt 800 µm bis 1000 µm aufweisen.

6. Matratze nach einem der vorangegangenen Ansprüche,
**dadurch gekennzeichnet, dass**
zur insbesondere offenen Schaumzellenbildung sowohl mindestens ausgewählten Einzelkomponenten als auch der Mischung der Komponenten Luft zugeführt ist.

7. Matratze nach einem der vorangegangenen Ansprüche,
**dadurch gekennzeichnet, dass**
der viskoelastische Schaum thermosensibel ist und eine Glasübergangstemperatur von im Wesentlichen bei Raumtemperatur, insbesondere bei 25°C liegend, besitzt.

8. Matratze nach Anspruch 6,
**dadurch gekennzeichnet, dass**
die Einzelkomponenten Polyole, Isocyanate und Aktivatoren umfassen.

9. Matratze nach einem der vorangegangenen Ansprüche,
**dadurch gekennzeichnet, dass**
diese eine Mehrzonen-Matratze ist.

10. Matratze nach Anspruch 9,
**dadurch gekennzeichnet, dass**
die Matratze über ihre Matratzenfläche verteilt mindestens sieben verschiedene Härtezonen aufweist, die durch Einschnitte und/oder Hohlräume in der Matratze gebildet sind.

## Claims

1. A polyurethane foam mattress comprising at least one anti-microbial additive, in particular configured as a device releasing metal ions, in particular a device releasing silver ions, wherein the polyurethane foam is configured as a viscoelastic foam with closed cells or open cells and the anti-microbial additive is provided as solid material in powder form with a substantially uniform grain size distribution and integrated into the foam reaction free with respect to the foam components, wherein a mattress cover is provided which includes silver components, in particular threads or fibers including silver, wherein the cover is configured as a quilted fleece and the quilting thread is made from silver or includes silver.

2. The mattress according to claim 1, wherein the additive components are substantially embedded in or accumulated at the foam cell connectors.

3. The mattress according to claims 1 or 2, wherein the additive is introduced as a dispersion into the polyol base component of the foam.

4. The mattress according to one of the preceding claims, wherein the mean particle size of the additive is essentially in a range of 1.0 µm to 1.5 µm, in particular 1.3 µm.

5. The mattress according to one of the preceding claims, wherein the foam cells have a mean diameter in a range of 600 µm to 1200 µm, preferably in a range of 800 µm to 1000 µm.

6. The mattress according to one of the preceding claims, wherein air is fed at least to selected individual components as well as to a mix of components in particular for forming open foam cells.

7. The mattress according to one of the preceding claims, wherein the viscoelastic foam is temperature-sensitive and has a glass-transition-temperature essentially at ambient temperature, in particular at 25°C.

8. The mattress according to claim 6, wherein the individual components include polyoles, isocyanates and activators.

9. The mattress according to one of the preceding claims, wherein the mattress is a multi-zone mattress.

10. The mattress according to claim 9, wherein the mattress includes at least seven different hardness zones distributed over its mattress surface, wherein the hardness zones are provided through slits and/or cavities in the mattress.

## Revendications

1. Matelas en mousse de polyuréthane, contenant au moins un additif antimicrobien, en particulier sous la forme d'un agent dégageant des ions métalliques, et en particulier des ions d'argent, dans lequel la mousse en polyuréthane est réalisée comme une mousse viscoélastique à cellules fermées ou à cellules ouvertes, et l'additif antimicrobien, qui se présente sous la forme d'une matière solide en forme de poudre avec une répartition approximativement régulière des tailles de particules, est intégré dans la mousse sans réaction vis-à-vis des composants de la mousse,
**caractérisé en ce que**
il est prévu une housse de matelas, qui comprend des éléments constitutifs en argent, en particulier des fils ou des fibres contenant de l'argent, ladite housse étant réalisée sous forme de non-tissé matelassé et les fils de matelassage sont en argent ou contiennent de l'argent.

2. Matelas selon la revendication 1,
**caractérisé en ce que** les particules d'additifs sont noyées ou fourrées en majorité dans les parois des cellules de la mousse.

3. Matelas selon la revendication 1 ou 2,
**caractérisé en ce que** l'additif est intégré sous forme de dispersion dans les composantes de départ de polyol de la mousse.

4. Matelas selon l'une des revendications précédentes,
**caractérisé en ce que** la taille de particules moyennes de l'additif est sensiblement de 1,0 µm à 1,5 µm, en particulier 1,3 µm.

5. Matelas selon l'une des revendications précédentes,
**caractérisé en ce que** les cellules de la mousse présentent un diamètre moyen de 600 µm à 1200 µm, de façon préférée 800 µm à 1000 µm.

6. Matelas selon l'une des revendications précédentes,
**caractérisé en ce que**, pour la formation des cellules de mousse, en particulier de cellules ouvertes, on ajoute de l'air aussi bien tout au moins à des composantes individuelles choisies qu'au mélange des composantes.

7. Matelas selon l'une des revendications précédentes,
**caractérisé en ce que** la mousse viscoélastique est thermosensible et possède une température de transition vitreuse sensiblement de l'ordre de la température ambiante, en particulier vers 25° C.

8. Matelas selon la revendication 6,
**caractérisé en ce que** les composantes individuelles comprennent des polyols, de l'isocyanate et des activateurs.

9. Matelas selon l'une des revendications précédentes,
**caractérisé en ce que** celui-ci est un matelas à plusieurs zones.

10. Matelas selon la revendication 9,
**caractérisé en ce que** le matelas présente au moins sept zones à dureté différente, réparties sur la surface du matelas, ces zones étant formées par des entailles et/ou des cavités dans le matelas.
